# EUROPEAN PATENT SPECIFICATION

(11) **EP 3 587 032 B1**
(45) Date of publication and mention of the grant of the patent: **04.11.2020**
(21) Application number: 19181248.6
(22) Date of filing: 19.06.2019
(51) Int. Cl.: B24B 13/005, B24B 47/22

(54) **AN APPARATUS FOR FIXING MOLDED BLANKS OF EYEGLASS FRAMES TO A MULTI-AXIS MACHINE TOOL FOR FINISHING OPERATIONS**
VORRICHTUNG ZUM EINSPANNEN VON BRILLENGESTELL-FORMTEILEN AUF EINER MEHRFACHACHSENMASCHINE ZUR ENDBEARBEITUNG
DISPOSITIF POUR LA FIXATION DE PIÈCES MOULÉES SUR UNE MACHINE MULTIAXIALE POUR DES OPÉRATIONS DE FINISSION

(30) Priority: 28.06.2018 IT 201800006757
(43) Date of publication of application: 01.01.2020
(73) Proprietor: Thema Optical S.r.l., 32040 Domegge di Cadore (BL) (IT)
(72) Inventor: TOFFOLI, Enrico, 32040 Domegge di Cadore BL (IT)
(74) Representative: Perani & Partners S.p.A.

(56) References cited:
- DE-A1- 10 053 230
- US-A- 5 284 348

## Description

The present invention relates to an apparatus for fixing blanks of eyeglass frames to a multi-axis machine tool, for finishing operations, for example milling and boring.

As is known, eyeglass frames are manufactured from a wide variety of materials and mainly through the molding of plastic materials, in the form of a board of a certain thickness, from which the blank of the eyeglass frame is obtained, provided with a pair of openings, side by side and spaced apart from each other, intended to receive the eyeglass lenses therein, after having carried out the appropriate processing, when this is customized for a given user.

The frame blank requires a multiplicity of finishing operations, not only in the circular seats for the lenses, but also in the frame part, so that it can take the shape and final configuration corresponding to a certain style for the frame. Also boring operations are necessary in order to be able to fix the supports of the temple hinges to the sides of the frame.

Finishing operations are carried out with specific tools on machines provided with multiple axes along which the tools are moved or rotated. Some of these machines are also equipped with five machining axes.

In each of these machines there is the problem of how to fix the blank of the frame on the worktable, not only in a stable manner with respect to all the machining axes of the machine, but also quickly and repetitively, without the need to tighten and loosen screws to lock and unlock clamps, each time the workpiece is changed, as is normally the case for the machining of generic objects.

According to the prior art in the field, as e.g. known from document US 5 284 348 A1, the blanks for eyeglass frames are positioned on the worktable by means of special equipment provided with mushroom heads on which the positioning and locking of the blank is obtained using the seats for the lenses within which mushroom heads are expanded.

The blocking of the blank, on each mushroom head, according to the prior art of the specific sector, is obtained due to the expansion of radial elements, carried by the mushroom heads of the apparatus, obtained by pushing a central conical pin, when moved axially, whose conical surface is in contact with the ends of the radial elements.

Unlocking is instead obtained by return springs of the radial elements towards the central axis of the mushroom head after the conical pin has been moved away from the ends of the radial elements.

These are very inaccurate devices that force the operator to make continuous adjustments in the electronic pneumatic or hydraulic control program that are detrimental to the uniformity of the products obtained and slow down production.

The object of the present invention is to provide an apparatus which, when applied on a machine tool with several machining axes, allows fixing with safety and precise repeatability of positioning, as well as with rapidity, a blank of eyeglass frame to carry out the necessary finishing operations thereon.

This and other objects which will become more apparent from the following description are achieved by an apparatus for fixing blanks for eyeglass frames on a multi-axis machine tool for finishing operations, which is characterized according to the following claim 1.

The invention will now be better described with reference to a preferred embodiment thereof given by way of a non-limiting example and, shown in the accompanying drawings, in which:
- Figure 1 shows a vertical sectional view of a pair of mushroom heads, constituting the apparatus, fixed on the support base;
- Figure 2 shows a plan view of the apparatus in Figure 1;
- Figure 3 shows a partially exploded perspective view of the pair of mushroom heads constituting the apparatus according to the invention;
- Figure 4 shows a perspective view, on an enlarged scale, of the upper frustoconical part of the piston element of one of the mushroom heads in which, in a schematic perspective view, the sliding coupling between the end of a radial slide of the mushroom head, facing the axis of the cylinder and the opposite guides, protruding radially from the truncated cone of the cylindrical core connected to the piston, is shown.

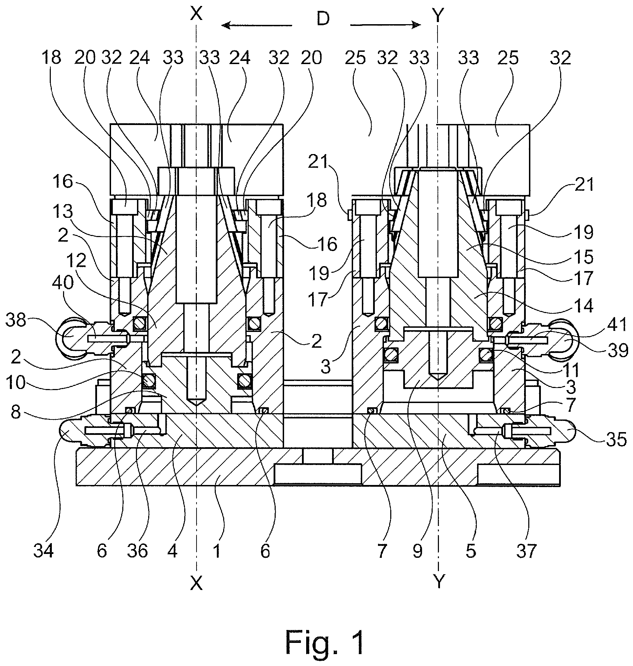

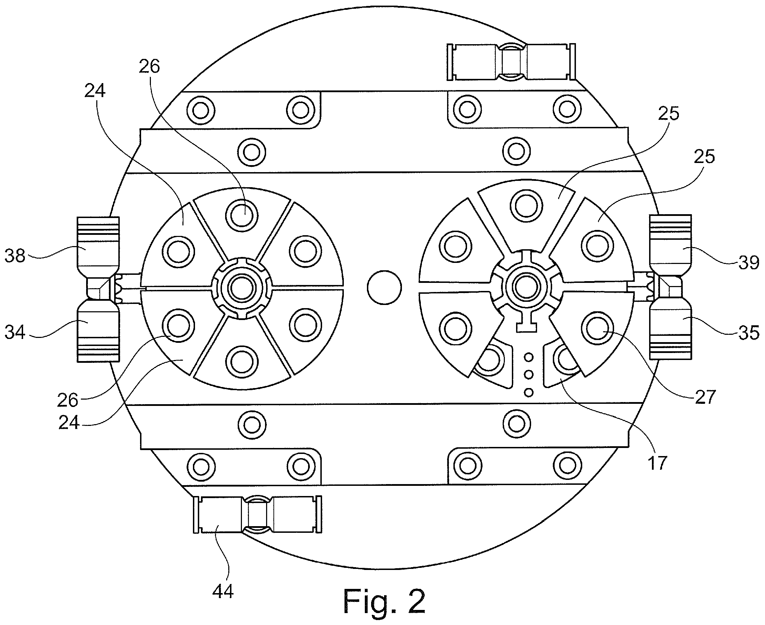

With reference to the aforementioned drawings and in particular to figures 1 and 2, the apparatus according to the invention, for fixing an eyeglass frame blank, not shown on the drawings, on a machine tool to perform finishing operations on the blank itself, for example milling and boring, comprises a base plate 1 on which a pair of cylinders 2 and 3 is positioned, with the interposition of respective bottom plates, 4 and 5 and annular sealing gaskets 6 and 7.

Each cylinder 2, and 3 therein houses a respective piston 8 and 9 with radial sealing rings 10 and 11. A cylindrical core 12 is connected to the piston 8 whose upper end portion 13, distal to the base plate 1, is frustoconical in shape. Similarly, the piston 9 is connected to a cylindrical core 14 whose upper end portion 15, distal to the base plate 1, is frustoconical in shape.

Respective cylindrical walls 16 and 17 are positioned around the cylindrical cores 12 and 14, coaxial with the underlying cylinders 2 and 3, to which they are fixed by means of respective groups, 18 and 19, of axial screws.

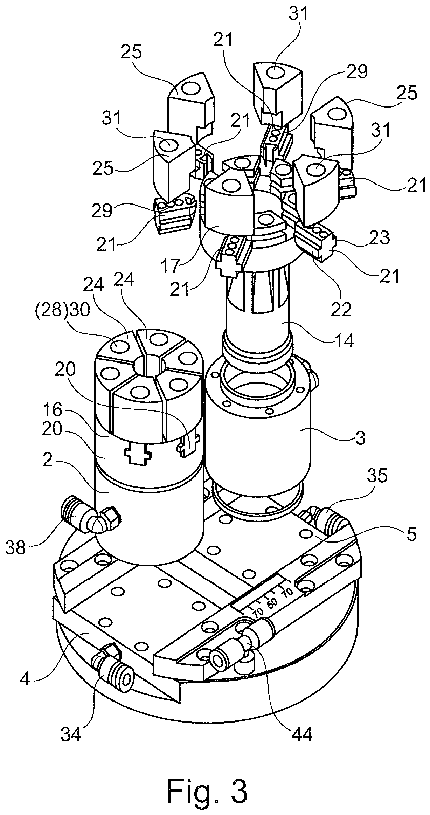

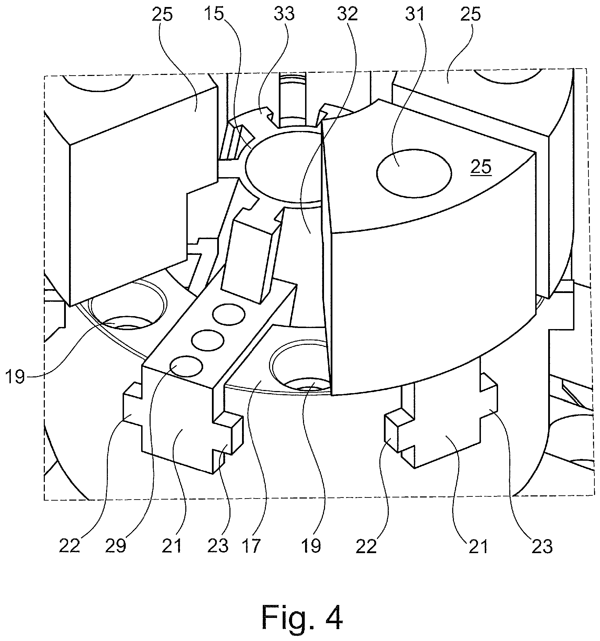

With particular reference to figures 3 and 4, it can be seen that the cylindrical walls 16 and 17, in their upper end, house a respective plurality 20 and 21 of radial slides engaged, with the respective wall, by means of conventional wing-type sliding guides 22 and 23.

Each slide, of the groups of slides 20 and 21, carries a respective block 24 and 25 fixed to the respective underlying slide, by means of precision screws 26, 27 which engage in threaded holes, such as those indicated by 28 and 29 in figures 3 and 4, passing through the openings 30 and 31 of the blocks. The groups of blocks 24 and 25 of the respective groups 20 21 of radial slides are shown on the drawings in a generic three-dimensional configuration before being customized in the shape and configuration proper to the internal contour of the lens seat of the frame blank with which they must engage to hold it on the mushroom heads when the groups of radial slides 20 and 21 are made to expand, as will be described in greater detail below.

Each slide, of the radial groups of slides 20 and 21, is connected, at its end facing the interior of the cylindrical walls 16 and 17, as can be seen for the end 32 of the slide 21a in figure 4, with a respective T-shaped guide 33, protruding from the conical surface of the upper frustoconical sections 13 and 15 of the cylindrical cores 12 and 14.

For the pneumatic operation of the apparatus with compressed air, the bottom plates 4 and 5 of the cylinders 2 and 3 are provided with respective fittings 34 and 35 connected to the ducts 36 and 37 which lead into the cylinders, below the respective pistons 8 and 9.

As can be seen in figure 1, the piston 9 is shown in the axially displaced position, with respect to the bottom plate 5, with the relative cylindrical core 14 shown in the axial position in which its frustoconical section 15 has determined the radial thrust of the slides 21, with consequent expansion of the mushroom head represented by the plurality of blocks 25.

In this position, the locking of a frame blank which was placed over the mushroom heads of the apparatus is obtained, as a consequence of the engagement of the group of blocks 24 and 25 within the seats for the lens of the frame.

Further fittings for compressed air, indicated with 38 and 39 in figure 1, with respective ducts 40 and 41, are provided in the apparatus according to the invention, to bring compressed air into the cavities 42 and 43 of the cylinders 2 and 3, when it is necessary to move the pistons 8 and 9 axially downwards, as shown in figure 1 for the piston 8 only, return the plurality 20 and 21 of radial slides and release the frame blank from the mushroom heads.

The lowering of the aforementioned pistons also causes the axial displacement towards the base plate 1 of the cores 12 and 13 and the consequent withdrawal towards the axis of the cylinders 2 and 3, of the plurality of radial slides 20 and 21, with consequent release of the frame blank engaged with the expansion heads of the apparatus.

With reference to figures 1, 2 and 3, it can be seen that the bottom closing plates 4 and 5 of the respective cylinders 2 and 3 can be displaced on the horizontal plane defined by the base plate 1 by means of a conventional mechanical screw and nut screw device 44 which allows positioning the cylinders 2 and 3 so that the horizontal distance D between their vertical axes X-X and Y-Y corresponds exactly to the distance necessary to engage the seats for the lens of the mounting blank on the blocks 24 and 25 of the plurality of slides 20 and 21.

It should be noted that the radial movement of the groups of slides 20 and 21 is always positively controlled, in both directions of movement, by virtue of the mechanical connection sliding between the ends of each radial slide and the relative T-shaped guide 33 of the frustoconical parts 13, 15 of the cylindrical cores 12 and 14.

This allows the positioning of the mushroom heads to be maintained during the processing of a large number of blanks of frames of the same type without having to resort to the frequent adjustments of the machine tool's operating program, as happens in the case of conventional apparatus.

## Claims

1. An apparatus for fixing molded blanks of eyeglass frames to a multi-axis machine tool for finishing operations such as, for example, milling and boring, comprising a base plate (1), to be fixed to the worktable of the machine tool, a pair of adjacent cylinders (2, 3), vertically extending from respective closing plates (4, 5) and fixed thereto, at their lower ends, with the interposition of a hydraulic or pneumatic seal (10, 11), the vertical axes (X-X, Y-Y) of the pair of adjacent cylinders being horizontally spaced apart from each other by a length (D) that substantially corresponds to the center-to-center distance between the lens receptacles formed in eyeglass frame blank to be finished, each cylinder (2, 3) having a respective piston element (8, 9) therein, connected to a respective cylindrical core (12, 14) whose upper end portion (13, 15), distal to said base plate (1), has a frustoconical shape, said piston elements being movable in their respective cylinders (2, 3), under pneumatic control and to raise and lower their respective cylindrical core (12, 14) connected thereto at the upper end, distal to said base plate (1), of each cylinder of the pair of cylinders (2, 3), respective radial slide groups (20, 21) being provided, each slide of each group having a respective block of plastic material whose profile is adapted to be machined into such a shape as to be able to fit into and engage with the inner profile of the respective lens receptacle, to hold it in position during the processing operations, **characterized in that** the end (32) of each slide of the plurality of slides (20, 21) facing toward the axes (X-X, Y-Y) of their respective cylinders (2, 3), has a guide slidingly engaged in an opposed axial guide (33) which radially projects from the frustoconical sections (13, 15) of their respective cylindrical cores (12, 14) connected to said piston elements (8, 9).

2. An apparatus as claimed in claim 1, **characterized in that** the upper end, distal to said base plate (1), of each cylinder of the pair of cylinders (2, 3) comprises respective cylindrical walls (6, 17), coaxial with the underlying cylinders (2, 3), and fixed thereto by means of respective groups (18, 19) of axial screws.

3. An apparatus as claimed in claim 1 or 2, **characterized in that** respective closing plates (4, 5) of their respective cylinders (2, 3) are slidingly placed on said base plate (1), a micrometric displacement device being provided for horizontally adjusting the distance (D) between the axes (X-X, Y-Y) of the cylinders (2, 3).

4. An apparatus as claimed in any of claims 1 to 3, **characterized in that** said guide for the end (32) of each slide of the plurality of slides (20, 21) facing toward the axes (X-X, Y-Y) of the respective cylinder (2, 3) has a C shape.

5. An apparatus as claimed in any of claims 1 to 4, **characterized in that** said axial guide (33) which radially projects from the frustoconical sections (13, 15) of the respective cylindrical cores (12, 14) connected to said piston elements ((8, 9), has a T shape.

## Patentansprüche

1. Vorrichtung zum Einspannen von Brillengestell-Formteilen auf einer mehrachsigen Werkzeugmaschine für Endbearbeitungen, wie zum Beispiel Fräsen und Bohren, umfassend eine Grundplatte (1), die an dem Arbeitstisch der Werkzeugmaschine einzuspannen ist, ein Paar benachbarter Zylinder (2, 3), die sich vertikal von jeweiligen Schließplatten (4, 5) erstrecken und an ihren unteren Enden unter Zwischenschaltung einer hydraulischen oder pneumatischen Dichtung (10, 11) darauf eingespannt sind, wobei die vertikalen Achsen (X-X, Y-Y) des Paares benachbarter Zylinder horizontal voneinander um eine Länge (D) beabstandet sind, die im Wesentlichen dem Mitte-zu-Mitte-Abstand zwischen den Linsenaufnahmen entspricht, die in dem zu bearbeitenden Brillengestellteil ausgebildet sind, wobei jeder Zylinder (2, 3) darin ein jeweiliges Kolbenelement (8, 9) aufweist, das mit einem jeweiligen zylindrischen Kern (12, 14) verbunden ist, dessen oberer Endabschnitt (13, 15) distal zu der Grundplatte (1) eine kegelstumpfförmige Form aufweist, wobei die Kolbenelemente in ihren jeweiligen Zylindern (2, 3) beweglich sind, unter pneumatischer Steuerung und das Anheben und Absenken ihres jeweiligen zylindrischen Kerns (12, 14), der damit am oberen Ende, distal zur Grundplatte (1), jedes Zylinders des Paares von Zylindern (2, 3) verbunden ist, bestimmend, wobei jeweilige radiale Schiebergruppen (20, 21) vorgesehen sind, wobei jeder Schieber jeder Gruppe einen jeweiligen Block aus Kunststoffmaterial aufweist, dessen Profil dazu geeignet ist, in eine solche Form bearbeitet zu werden, dass es in das Innenprofil der jeweiligen Linsenaufnahme passt und mit diesem in Eingriff treten kann, um es während der Bearbeitungsvorgänge in Position zu halten, **dadurch gekennzeichnet, dass** das Ende (32) jedes Schiebers der Vielzahl von Schiebern (20, 21), den Achsen (X-X, Y-Y) ihrer jeweiligen Zylinder (2, 3) zugewandt, eine Führung aufweist, die gleitend in eine gegenüberliegende axiale Führung (33) eingreift, die radial von den kegelstumpfförmigen Abschnitten (13, 15) ihrer jeweiligen zylindrischen Kerne (12, 14) vorsteht, die mit den Kolbenelementen (8, 9) verbunden sind.

2. Vorrichtung gemäß Anspruch 1, **dadurch gekennzeichnet, dass** das obere Ende, distal zur Grundplatte (1), jedes Zylinders des Zylinderpaares (2, 3) jeweils zylindrische Wände (6, 17) umfasst, die koaxial zu den darunter liegenden Zylindern (2, 3) sind und mittels entsprechender Gruppen (18, 19) von axialen Schrauben daran eingespannt sind.

3. Vorrichtung gemäß Anspruch 1 oder 2, **dadurch gekennzeichnet, dass** jeweilige Schließplatten (4, 5) ihrer jeweiligen Zylinder (2, 3) gleitend auf der Grundplatte (1) angeordnet sind, wobei eine mikrometrische Verschiebeeinrichtung zum horizontalen Einstellen des Abstands (D) zwischen den Achsen (X-X, Y-Y) der Zylinder (2, 3) vorgesehen ist.

4. Vorrichtung gemäß einem der Ansprüche 1 bis 3, **dadurch gekennzeichnet, dass** die Führung für das Ende (32) jedes Schiebers der Vielzahl von Schiebern (20, 21), den Achsen (X-X, Y-Y) des jeweiligen Zylinders (2, 3) zugewandt, eine C-Form aufweist.

5. Vorrichtung gemäß einem der Ansprüche 1 bis 4, **dadurch gekennzeichnet, dass** die axiale Führung (33), die radial von den kegelstumpfförmigen Abschnitten (13, 15) der jeweiligen zylindrischen Kerne (12, 14) vorsteht, die mit den Kolbenelementen (8, 9) verbunden sind, eine T-Form aufweist.

## Revendications

1. Appareil pour la fixation d'ébauches moulées de montures de lunettes à une machine-outil à axes multiples pour des opérations de finition telles que, par exemple, fraisage et perçage, comprenant une plaque de base (1), destinée à être fixée au plateau porte-pièce de la machine-outil, une paire de cylindres adjacents (2, 3), s'étendant verticalement à partir de plaques de fermeture (4, 5) respectives et fixés à celles-ci, au niveau de leurs extrémités inférieures, avec interposition d'un joint hydraulique ou pneumatique (10, 11), les axes verticaux (X-X, Y-Y) de la paire de cylindres adjacents étant espacés l'un de l'autre horizontalement d'une longueur (D) qui correspond essentiellement à la distance de centre à centre entre les orifices pour verre formés dans l'ébauche de monture de lunettes à finir, chaque cylindre (2, 3) comportant intérieurement un élément formant piston (8, 9) respectif, relié à un noyau cylindrique (12, 14) respectif dont la partie d'extrémité supérieure (13, 15), distale vis-à-vis de ladite plaque de base (1), présente une forme tronconique, lesdits éléments formant pistons étant mobiles dans leurs cylindres (2, 3) respectifs, sous commande pneumatique et pour élever et abaisser leurs noyaux cylindriques (12, 14) respectifs reliés à eux au niveau de l'extrémité supérieure, distale vis-à-vis de ladite plaque de base (1), de chaque cylindre de la paire de cylindres (2, 3), des groupes de coulisseaux radiaux (20, 21) respectifs étant prévus, chaque coulisseau de chaque groupe comportant un bloc de matière plastique respectif dont le profil est apte à être usiné pour lui donner une forme telle qu'il puisse être inséré dans le profil intérieur de l'orifice pour verre respectif et venir en prise avec celui-ci, afin de le maintenir en place au cours des opérations de traitement, **caractérisé en ce que** l'extrémité (32) de chaque coulisseau de la pluralité de coulisseaux (20, 21) orientée en direction des axes (X-X, Y-Y) de leurs cylindres (2, 3) respectifs, comporte un guide en prise à coulissement dans un guide axial opposé (33) qui fait saillie radialement à partir des sections tronconiques (13, 15) de leurs noyaux cylindriques (12, 14) respectifs reliés auxdits éléments formant pistons (8, 9).

2. Appareil selon la revendication 1, **caractérisé en ce que** l'extrémité supérieure, distale vis-à-vis de ladite plaque de base (1), de chaque cylindre de la paire de cylindres (2, 3) comprend des parois cylindriques (6, 17) respectives, coaxiales avec les cylindres sous-jacents (2, 3), et fixées à ceux-ci au moyen de groupes (18, 19) respectifs de vis axiales.

3. Appareil selon la revendication 1 ou 2, **caractérisé en ce que** les plaques de fermeture (4, 5) respectives de leurs cylindres (2, 3) respectifs sont placées à coulissement sur ladite plaque de base (1), un dispositif de déplacement micrométrique étant prévu pour l'ajustement horizontal de la distance (D) entre les axes (X-X, Y-Y) des cylindres (2, 3).

4. Appareil selon l'une quelconque des revendications 1 à 3, **caractérisé en ce que** ledit guide pour l'extrémité (32) de chaque coulisseau de la pluralité de coulisseaux (20, 21) orientée en direction des axes (X-X, Y-Y) des cylindres (2, 3) respectifs présente la forme d'un C.

5. Appareil selon l'une quelconque des revendications 1 à 4, **caractérisé en ce que** ledit guide axial (33), qui fait saillie radialement à partir des sections tronconiques (13, 15) des noyaux cylindriques (12, 14) respectifs reliés auxdits éléments formant pistons (8, 9), présente la forme d'un T.
